# FASCICULE DE BREVET EUROPEEN

(11) **EP 1 722 472 B1**
(45) Date de publication et mention de la délivrance du brevet: **29.07.2015**
(21) Numéro de dépôt: 06290667.2
(22) Date de dépôt: 24.04.2006
(51) Int. Cl.: H03G 3/12

(54) **Boîte d'encastrement et procédé de fabrication**
Einbaudose und Herstellungsverfahren
Flush mounted box and method of production

(30) Priorité: 10.05.2005 FR 0504681
(43) Date de publication de la demande: 15.11.2006
(73) Titulaire: Legrand France, 87000 Limoges (FR); Legrand SNC, 87000 Limoges (FR)
(72) Inventeur: Roth, Jean-Paul, 87380 Saint-Germain-les-Belles (FR); Chaure, Christophe, 87100 Limoges (FR); Vergne, Raphaël, 87000 Limoges (FR); Guitard, Julien, 87000 Limoges (FR); Mendez, Pascal, 87170 Isle (FR)
(74) Mandataire: Santarelli

(56) Documents cités:
- EP-A1- 0 706 250
- FR-A1- 2 780 567
- US-A- 2 047 294
- US-A- 2 875 914

## Description

### DOMAINE DE L'INVENTION

L'invention concerne de manière générale les boîtes d'encastrement dans une cloison.

### ARRIERE PLAN TECHNOLOGIQUE

On sait qu'il existe des boîtes d'encastrement pour appareils électriques dans une cloison qui comporte une paroi de façade. L'assujettissement de la boîte d'encastrement dans une ouverture de cette paroi de façade se fait par serrage de cette dernière.

On connaît déjà, notamment par le document FR 2 670 625, une boîte d'encastrement de ce type comportant une paroi latérale présentant un bord en saillie vers l'extérieur et une patte de serrage adaptée à pivoter au moyen d'une vis de commande entre une position rétractée dans un logement de la boîte ménagé dans la paroi latérale et une position sortie vers l'extérieur de la boîte. La patte de serrage est également susceptible d'être commandée, par la vis, en translation vers ledit bord, pour le serrage de la paroi entre la patte et le bord en saillie.

On connaît également par le brevet américain 2,875,914 une boîte d'encastrement comportant :
- un corps comportant un fond, une paroi latérale présentant du côté opposé audit fond une ouverture, un bord en saillie vers l'extérieur au niveau de ladite ouverture, un logement au niveau dudit fond, ladite boîte comportant en outre :
- une patte, pour serrer une cloison entre ledit bord et ladite patte, présentant un moyeu, ladite patte étant délimitée par un bord périphérique à l'écart dudit moyeu et deux bords latéraux s'étendant chacun dudit moyeu à une extrémité respective dudit bord périphérique ; et
- une vis avec laquelle ledit moyeu est en prise, pour la commande à pivotement de ladite patte entre une position rétractée dans ledit logement et une position sortie en saillie à l'extérieur dudit corps, ledit corps comportant en outre des moyens de guidage de ladite patte de sa position sortie vers ledit bord et inversement, ladite paroi comportant, au niveau dudit fond, une fenêtre ouvrant sur l'intérieur dudit corps formant ledit logement pour le passage de ladite patte de l'une à l'autre desdites position rétractée et position sortie, ladite fenêtre et ladite patte s'étendant transversalement à l'axe de ladite vis, ladite fenêtre s'étendant selon cette direction transversale d'un premier bord à un deuxième bord opposé audit premier bord, de part et d'autre dudit moyeu, la distance entre ledit moyeu et ledit premier bord étant supérieure à la distance entre ledit moyeu et ledit deuxième bord, ces distances étant adaptées à ce que ladite patte passe de l'une à l'autre desdites position rétractée et position sortie par la portion de fenêtre située entre ladite vis et ledit premier bord.

### OBJET DE L'INVENTION

L'invention vise à améliorer l'utilisation et la fabrication d'une telle boîte.

A cet effet, l'invention propose une boîte d'encastrement selon la revendication 1.

Ainsi, la forme de la fenêtre assure le passage de l'une à l'autre des positions rétractée et sortie tout en fournissant les butées nécessaires à la patte dans chacune des positions. La patte est logée à l'intérieur du corps sans parois de séparation avec l'intérieur de la boîte. L'encombrement dû à la patte est réduit au volume de la patte.

Selon des caractéristiques de mise en oeuvre particulièrement simples et commodes tant à la fabrication qu'à l'utilisation :
- ladite patte comporte une platine en forme de secteur angulaire et un bossage comportant ledit moyeu, ledit bossage s'étendant selon la direction de la vis vers un puits que comporte ledit fond ; et éventuellement
- lesdits bords latéraux de ladite patte sont alignés ; et/ou
- ladite fenêtre présente un décrochement, la portion dudit deuxième bord s'étendant à partir dudit décrochement vers ledit fond étant en regard dudit premier bord, ledit premier bord et ladite portion étant chacun situés à égale distance dudit moyeu ; et éventuellement
- ladite patte est en matière plastique ; et/ou
- ledit puits s'étend vers l'intérieur en regard d'une aile en saillie de ladite patte en position rétractée, cette aile étant adaptée à former butée à pivotement pour ladite patte lorsque cette patte a une position sur ladite vis telle que ladite aile est située dans ledit puits ; et/ou
- ledit bossage présente une extrémité à l'écart de ladite platine, cette extrémité étant située dans ledit puits en position rétractée de ladite patte ; et éventuellement
- ladite patte est en matière plastique et ledit corps comporte des liens sécables entre ladite extrémité inférieure dudit bossage et ledit puits, lesdits liens étant adaptés à être rompus par pivotement de ladite patte de sa position rétractée à sa position sortie ; et/ou
- ladite paroi latérale comporte un renfoncement s'étendant dudit bord en saillie à ladite fenêtre et adapté à accueillir ladite vis, ce renfoncement formant avec les portions adjacentes de ladite paroi latérale lesdits moyens de guidage ; et éventuellement
- l'extrémité dudit renfoncement opposée à ladite fenêtre comporte des moyens d'encliquetage de la tête de ladite vis ; et/ou
- ledit bord en saillie dudit corps comporte au moins deux oreilles réparties de part et d'autre de ladite vis, ces oreilles étant chacune recourbées vers ladite paroi latérale ; et/ou
- l'angle existant entre ladite paroi latérale et ledit fond au niveau de leur raccordement est arrondi ; et/ou
- ladite boîte comporte, en outre de ladite patte, de ladite vis, de ladite fenêtre et desdits moyens de guidage formant un premier ensemble de serrage, un deuxième ensemble de serrage semblable audit premier ensemble de serrage disposé à l'opposé dudit premier ensemble de serrage.

L'invention propose également un procédé de fabrication d'une boîte telle que précédemment exposée, comportant l'étape de mouler ledit corps, ledit procédé étant caractérisé en ce que, lors de l'étape de moulage dudit corps, on moule ladite patte dans sa position rétractée avec plusieurs liens sécables reliant ladite patte audit corps.

Et éventuellement, ce procédé comporte en outre l'étape d'insérer ladite vis dans un renfoncement de ladite paroi latérale débouchant sur ladite fenêtre et de mettre ledit moyeu avec ladite vis et l'étape de sectionner au moins un dit lien sécable.

### BREVE DESCRIPTION DES DESSINS

- la figure 1 est une vue en perspective d'une boîte d'encastrement selon l'invention, les pattes étant en position rétractée ;
- la figure 2 est une vue en perspective de l'arrière de la boîte de la figure 1 ;
- la figure 3 est une vue agrandie, en perspective, de la fenêtre de la boîte, la patte étant en position rétractée ;
- la figure 4 est une vue similaire à celle de la figure 1, la patte étant sortie et remontée vers le bord en saillie ;
- la figure 5 est une vue en plan de l'intérieur et du bord en saillie du corps et des pattes ;
- la figure 6 est une vue agrandie du détail VI de la figure 5 ;

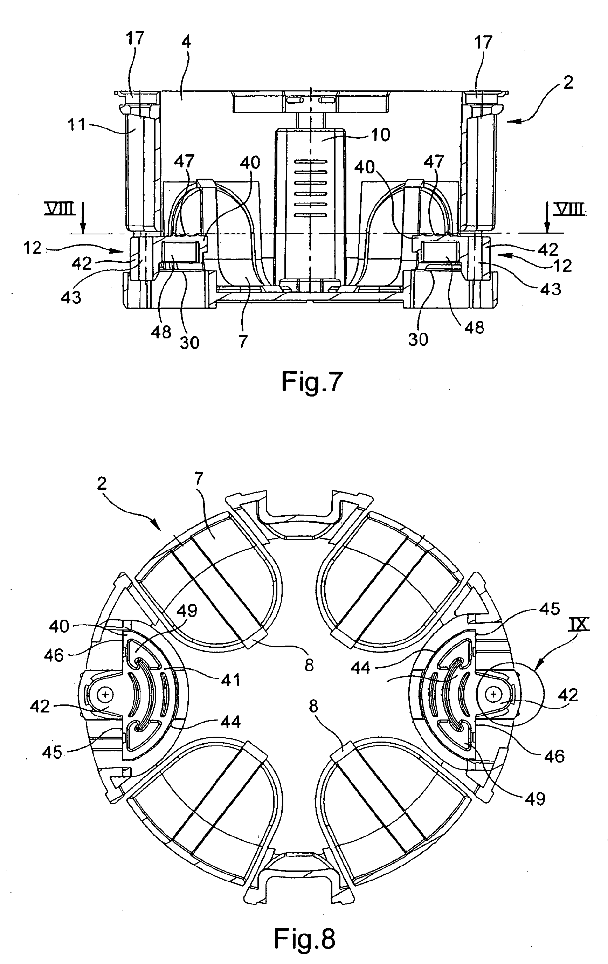

- la figure 7 est une vue en coupe de la boîte selon le plan repéré par VII-VII sur la figure 5 ;
- la figure 8 est une vue en coupe de la boîte selon le plan repéré par VIII-VIII sur la figure 7 ;
- la figure 9 est une vue agrandie du détail IX de la figure 8 ;
- la figure 10 est une vue en coupe du détail IX selon le plan repéré par X-X sur la figure 9 ;
- la figure 11 est une vue en coupe du détail VI selon le plan repéré par XI-XI sur la figure 6 ;
- la figure 12 est une vue similaire à celle de la figure 7 sur laquelle sont représentées les vis et la paroi dans laquelle la boîte est encastrée, les pattes et le bord en saillie serrant conjointement la paroi ; et
- la figure 13 est une représentation schématique du procédé de fabrication selon l'invention.

### DESCRIPTION DETAILLEE D'UN EXEMPLE DE REALISATION

La boîte d'encastrement 1 selon l'invention est destinée à accueillir un appareil électrique encastré dans une cloison, ici une cloison sèche.

Elle comporte un corps 2 en matière plastique. Ce corps 2 comporte une paroi latérale 3 de forme globalement cylindrique, un fond 4 et une ouverture frontale opposée au fond 4. La paroi 3 présente un bord qui délimite l'ouverture. Ce bord comporte une collerette 5 qui s'étend transversalement à la paroi latérale 3, en saillie vers l'extérieur.

La collerette 5 est fine et déborde peu de la paroi latérale 3. En chacun de quatre emplacements répartis angulairement sur la périphérie de la collerette 5, s'étend une oreille 6 appartenant au bord.

Chaque oreille 6 est sensiblement triangulaire, la pointe à l'écart de la paroi 3 étant arrondie. Alors que la collerette 5 est plate, les oreilles 6 sont légèrement recourbées vers le plan comportant le fond 4.

La paroi latérale 3 et le fond 4 présentent des parties défonçables 7 permettant, après enlèvement de ces parties défonçables 7, la mise en place de conducteurs d'arrivée et de départ à relier à l'appareil électrique.

Les parties défonçables 7 comportent chacune deux portions sensiblement transversales l'une par rapport à l'autre, l'une des portions appartenant au fond 4 de la boîte 1, tandis que l'autre appartient à la paroi latérale 3. Chaque partie défonçable 7 est reliée par une zone sécable 8 au corps 2, l'une des zones sécables 8 reliant la partie défonçable 7 à la paroi latérale 3, l'autre zone sécable 8 reliant la partie défonçable 7 au fond 4.

Les zones sécables 8 sont en matière plastique, les parties défonçables 7 et le corps 2 étant moulés d'une pièce.

Les parties défonçables 7 et les découpes qui les accueillent sont ici de forme globalement ovale.

L'angle existant entre la paroi latérale 3 et le fond 4 au niveau de leur raccordement est arrondi de sorte que l'insertion de la boîte 1 dans la cloison est facilitée.

De manière connue en soi, la paroi latérale 3 porte sur sa surface intérieure deux surépaisseurs 10.

Chaque surépaisseur 10 est fine et allongée, percée de trois trous côte à côte. Ces trous sont destinés à accueillir une vis de montage de l'appareil électrique dans la boîte 1. Vers le fond 4, les trous traversent la paroi 3 et débouchent sur l'extérieur de celle-ci du fait qu'en cette zone, la paroi 3 n'est formée que de la surépaisseur 10.

Les deux surépaisseurs 10 sont positionnées diamétralement opposées.

Chaque surépaisseur 10 présente sur sa surface intérieure à la boîte 1 des petits crans destinés à la fixation d'un appareil électrique.

La paroi 3 comporte également, sur sa surface extérieure, deux renfoncements 11 diamétralement opposés. Les deux renfoncements 11 et les deux surépaisseurs 10 sont alternés et régulièrement répartis sur la paroi 3. Et chaque oreille 6 est placée entre une surépaisseur 10 et un renfoncement 11.

On décrit maintenant l'un quelconque des renfoncements 11.

Celui-ci est semi-cylindrique. Il s'étend selon une direction axiale qui correspond à la direction des génératrices de la paroi 3.

Le renfoncement 11 s'étend à partir de la collerette 5 en direction du fond 4. Vers le fond 4, le renfoncement 11 débouche sur l'une de deux fenêtres 12 que comporte la paroi 3. Du côté de la collerette 5, celui-ci se termine par un anneau dont le rayon intérieur est très inférieur à celui du renfoncement 11. L'ouverture centrale de l'anneau autorise le passage de la tige 15 d'une vis 16. Au dessus de cet anneau, la collerette 5 est ouverte sur un petit logement circulaire 17 permettant d'accueillir la tête de la vis 16. Ce logement circulaire 17 comporte, sensiblement dans le plan de la collerette 5, une petite saillie formant moyen d'encliquetage 19 pour la tête de la vis 16. Ainsi, une fois que la tige 15 est passée dans l'anneau et est accueillie dans le renfoncement 11 et que la tête est encliquetée dans son logement circulaire 17, la vis 16 est bloquée selon la direction axiale mais est toujours libre de pivoter sur elle-même.

La fenêtre 12 présente une forme sensiblement rectangulaire. Sa hauteur selon la direction axiale est très inférieure à la hauteur du renfoncement 11. La fenêtre 12 est centrée transversalement à la direction axiale sur la tige 15 de la vis 16. Une avancée rectangulaire 18 de la paroi 3 vient rétrécir la dimension transversale de la fenêtre du côté de la fenêtre 12 le plus proche de la collerette 5.

La fenêtre 12 comporte un bord 20 du côté du renfoncement 11, un bord 21 opposé au bord 20, un bord 22 en créneaux du côté de l'avancée 18 et un bord 23, droit, opposé au bord 22. Le bord 21 est à l'écart du plan comportant le fond 4.

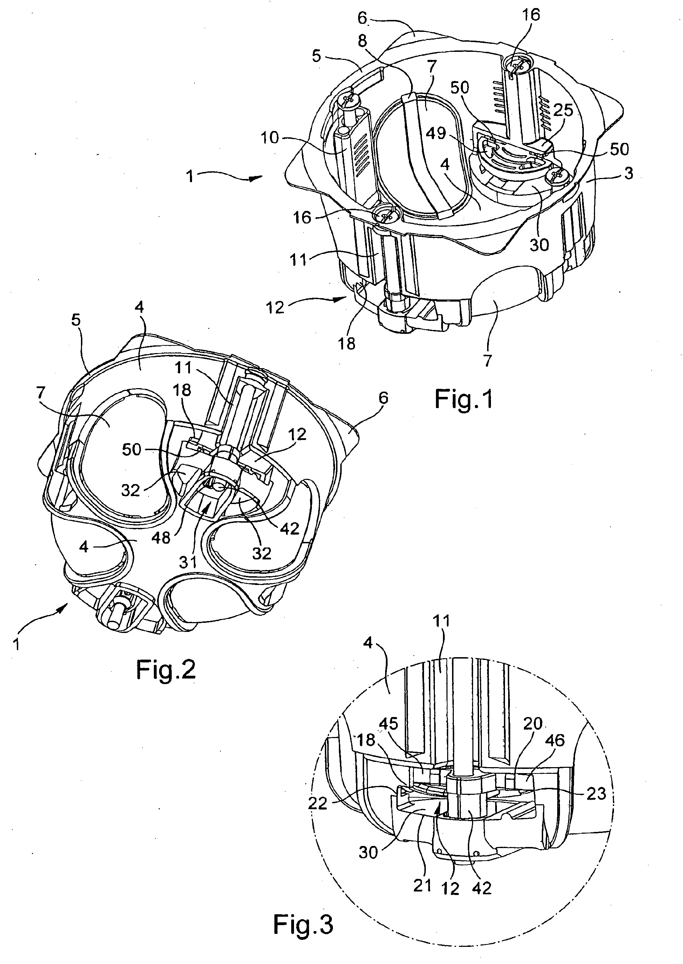

Comme on le voit sur la figure 2, sur sa surface intérieure, la paroi 3 présente, le long du bord 20, un rebord 25 en saillie.

Le rebord 25 s'étend transversalement à la paroi 3 vers l'intérieur sur une distance équivalente au rayon du renfoncement 11. Ainsi, le rebord 25 présente une portion de chaque côté du renfoncement 11. L'une d'entre elle est plus longue que l'autre puisque le bord 20 n'est pas d'égale distance de part et d'autre du renfoncement 11 du fait de l'avancée 18.

Le fond 4 comporte deux marches semi-circulaires 30, chacune s'étendant devant l'une des fenêtres 12. Les bords périphériques des marches 30 sont en regard l'un de l'autre.

Chaque marche 30 atteint la hauteur du bord 21.

On décrit une quelconque des deux marches 30. Pour un observateur placé à l'intérieur du corps 2 et regardant vers le renfoncement 11, le plat de la marche 30 comporte deux zones latérales pleines et une zone centrale ouvrant sur un puits 31. La zone centrale s'étend de la fenêtre 12 jusqu'à la bordure périphérique.

Le puits 31 s'étend, selon la direction axiale, du bord 21 jusqu'au plan comportant le reste du fond 4.

Lorsque l'observateur est placé à l'extérieur et regarde l'arrière de la marche 30, se présentent le puits 31 et, de part et d'autre de ce puits 31, deux renfoncements 32 dont le fond correspond aux deux zones latérales. Ces renfoncements 32 sont délimités par une bordure épaisse qui, le long de la périphérie semi-circulaire, correspond sensiblement au rattrapage de hauteur entre le haut de la marche 30 et le reste du fond 4.

La tige 15 de la vis 16 a une longueur correspondant sensiblement à la distance entre la collerette 5 et le fond 4 de sorte que lorsque la tête est encliquetée dans son logement 17, l'extrémité libre de la tige 15 est située dans le puits 31 sans en dépasser.

La boîte 1 comporte également deux pattes de serrage 40 s'étendant principalement parallèlement au fond 4. Chaque patte 40 comporte une platine 41 en forme de secteur angulaire, globalement semi-cylindrique, légèrement plus petite que la marche 30. Les pattes 40 comportent également un bossage 42 présentant un moyeu 43 en son centre.

Le bossage 42 s'étend selon la direction axiale sur une longueur plus importante que l'épaisseur de la platine 41.

La platine 41 comporte un bord périphérique 44 et deux bords alignés 45, 46 s'étendant chacun du bossage 42 à l'une des extrémités du bord 44. Les bords 45, 46 sont alignés de part et d'autre du bossage 42.

Lorsqu'un observateur regarde la fenêtre 12 de l'extérieur de la boîte, il voit à travers cette fenêtre 12 le bord 46 entier. En revanche, il ne voit pas l'extrémité du bord 45 au contact du bord périphérique 43. En effet, cette extrémité est cachée derrière l'avancée 18.

La patte 40 présente d'un côté une surface 47 globalement plate présentant deux renfoncements 49 de part et d'autre d'une zone centrale.

La zone centrale comporte trois stries en saillie pour mieux agripper la façade arrière de la cloison.

De l'autre côté, outre le bossage 42 faisant saillie, la platine 41 comporte une aile 48 selon la direction axiale se projetant du même côté du bossage 42.

L'aile 48 est positionnée au dos de la zone centrale et s'étend du bossage 42 jusqu'au bord périphérique 44 de la platine 41. Cette aile 48 est ici formée par une petite paroi en U en saillie par rapport à la platine 41.

De part et d'autre de l'aile 48 et au centre de celle-ci, la platine 41 présente des renfoncements. Ces trois renfoncements s'étendent au dos de la zone centrale. Au dos des renfoncements 49, la surface de la patte 40 est plate.

Les différents renfoncements permettent notamment une économie de matière plastique.

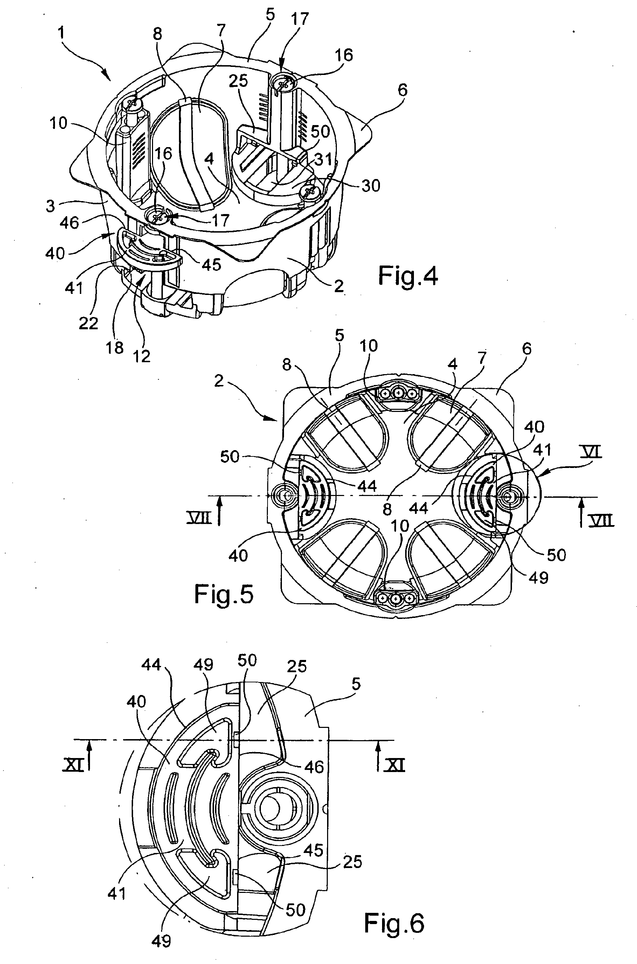

La patte 40 est reliée au corps 2 après le moulage par quatre liens sécables en matière plastique (figures 5, 10, 11). Deux liens 50 relient le rebord 25 de la fenêtre 12 respectivement au bord 45 et au bord 46 de la patte 40. La surface 47 de la patte 40 se trouve sensiblement dans le plan comportant le bord 20. Deux liens 51 relient l'extrémité libre du bossage 42 à la surface intérieure du puits 31, le bossage 42 rentrant légèrement dans le puits 31. Le sectionnement des liens est précisé ci-après.

Chaque moyeu 43 accueille la tige 15 de la vis 16 de sorte que la patte 40 est positionnée à une hauteur déterminée de la tige 15.

On décrit maintenant en détail l'utilisation des pattes dans une telle boîte d'encastrement.

Préalablement à l'utilisation des pattes 40, la boîte d'encastrement 1 est insérée dans une ouverture de la paroi 60. Cette paroi 60 comporte une façade avant et une façade arrière. Les oreilles 6 de la boîte 1 restent du côté de la façade avant de la paroi 60. Les oreilles 6 étant courbées vers le plan comportant le fond 4, lorsque les pattes 40 viennent en contact de la façade arrière de la paroi 60, comme on l'explique dans la suite, on continue à visser les pattes 40 de sorte que le serrage s'amplifie non pas par l'avancée des pattes 40 mais par l'écrasement des oreilles 6 contre la façade avant. C'est-à-dire que les oreilles 6, qui étaient courbées vers le plan contenant le fond 4, sont alors aplaties dans le plan comportant la collerette 5. Les oreilles 6 épousent parfaitement la forme de la façade avant même si celle-ci présente quelques irrégularités.

Pour revenir à l'utilisation des pattes 40, lorsque les liens 50, 51 sont rompus, la patte 40 est mobile à pivotement autour de la tige 15 entre une position rétractée dans laquelle elle est positionnée dans le corps 2 au-dessus de la marche 30 et une position sortie dans laquelle elle a pivoté d'un demi-tour et se retrouve à l'extérieur de la boîte 1. Ce pivotement s'effectue avec celui de la vis 16 qui pivote également, la patte 40 étant, dans ces deux positions, située à une hauteur déterminée de la tige 16.

La patte 40 est également mobile à translation, principalement lorsqu'elle se trouve à l'extérieur du corps 2. Comme on le voit sur la figure 5, la patte 40 peut se déplacer vers une position plus haute sur la tige 15, à différents niveaux du renfoncement 11. Dans ce cas, la patte 40 subit une translation lorsque la tige 15 pivote.

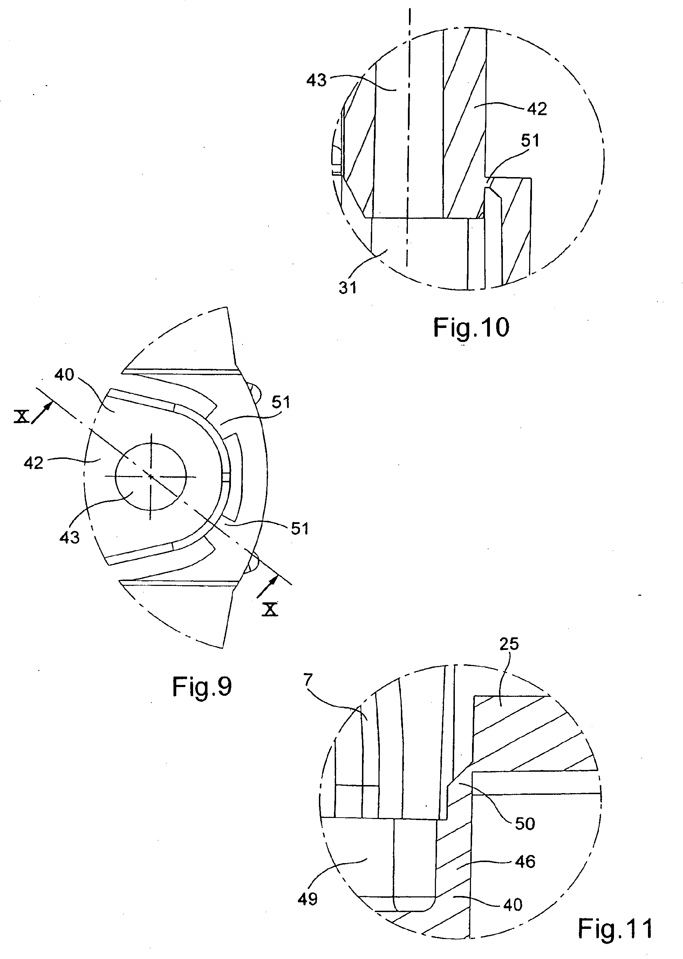

Comme on le voit sur la figure 2, à la première utilisation de la patte, en position rétractée initiale, la patte est reliée au corps 2 par les deux liens sécables 51 (figure 11) reliant l'extrémité libre du bossage 42 avec la paroi latérale du puits 31. Ces liens sécables 51 sont coupés par simple pivotement de la patte 30.

La patte 40 est initialement en position rétractée à l'intérieur de la boîte 1, avec la vis 16 positionnée dans le renfoncement 11 et traversant le moyeu 43 afin de pouvoir commander la patte 40. Cette patte 40 est dans sa position rétractée au droit de la fenêtre 12 et plus particulièrement au droit de la portion comprenant l'avancée 18.

La tête de la vis 16 étant encliquetée dans son logement à l'aide d'un tournevis lorsqu'on fait tourner cette vis 16, la patte 30 et la vis 16 commencent leur pivotement autour de l'axe de la tige de la vis. Les liens 51 se rompent.

Du fait des dimensions de la fenêtre 12, un seul sens de rotation de la vis 16, premier sens de rotation, permet de faire saillir la patte 40 au travers de la fenêtre 12 ; ce sens permet, dans un premier temps, au bord 45 de s'éloigner de l'avancée 18.

En continuant à visser dans le premier sens, on fait passer l'intégralité de la platine 41 à travers la fenêtre 12.

Une fois que la platine 41 est entièrement à l'extérieur, le bord latéral 46 vient buter contre l'avancée 18. La patte 40 ne peut plus pivoter. Durant toute cette étape, la patte 40 est restée à une hauteur constante (selon la direction axiale).

En continuant à visser, la patte 40, dont le bord 46 est en butée, est contrainte de monter le long de la tige 15 de la vis 16. Du fait de sa position initiale du moyeu 43 (dans l'axe du renfoncement 11), celui-ci se trouve au contact du renfoncement 11. En continuant à monter le long de la vis 15, le moyeu 43 reste dans le renfoncement 11 et le bord latéral 46 est situé contre une portion de la paroi 3 proche du renfoncement 11. Le bord 46 continue de buter contre la paroi 3 tant que l'on continue le vissage de la vis 16.

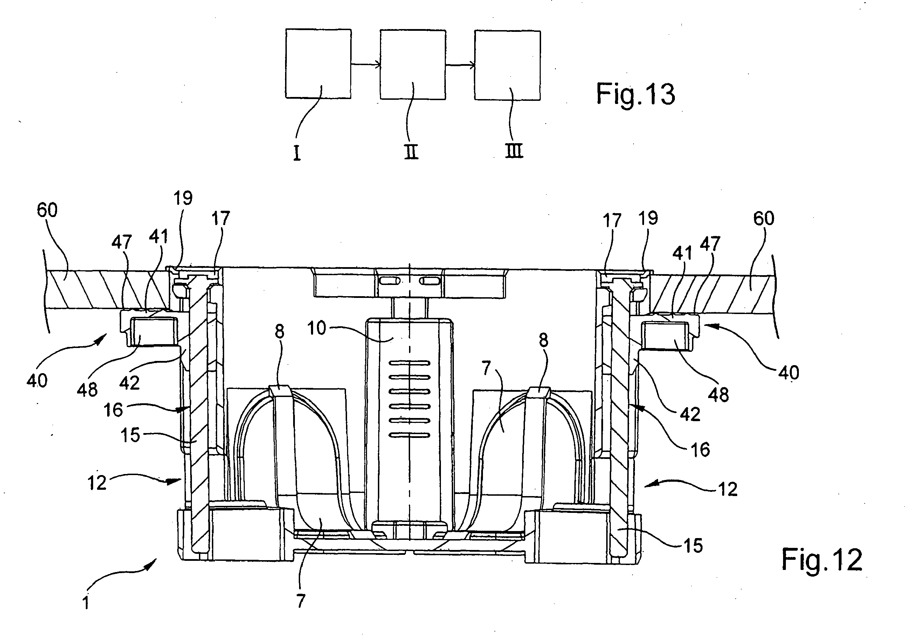

Ce vissage se poursuit jusqu'à ce que la patte 40 vienne en contact avec la façade arrière de la paroi 60 dans laquelle on souhaite encastrer la boîte 1 (figure 12).

A partir de cette position, il est possible de faire redescendre la patte 40 toujours en utilisant un tournevis et en tournant la vis dans un deuxième sens de rotation.

De la même façon que la patte 40 était montée le long du renfoncement, elle descend vers la fenêtre 12.

Lors de cette descente, c'est le bord 45 qui vient en butée contre une portion de la paroi 3 adjacente au renfoncement 11 (de l'autre côté du renfoncement 11 par rapport à la montée).

Lorsque l'ensemble de la patte 40 est arrivé au droit de la fenêtre 12, la patte 40 cesse de descendre avec la rotation de la vis 16. Le bord 45 qui venait précédemment en butée ne trouve plus aucune résistance, la patte 40 ne fait que pivoter avec la vis 16.

Ainsi, lorsqu'on souhaite désencastrer la boîte 1, l'utilisateur peut visualiser la fin de la descente des pattes 40 puisque celles-ci arrivent dans l'intérieur du corps 2.

Le pivotement se fait jusqu'à ce que la patte soit en position rétractée et jusqu'à ce que ce bord 45 vienne buter sur la surface intérieure de l'avancée 18.

La patte 40 est en position rétractée, la manoeuvre peut s'arrêter. Toutefois, si l'on continue la rotation de la vis 16, la patte 40 étant en butée, celle-ci reprend sa descente le long de la vis 16.

Lorsque la patte 40 est entièrement en regard de la portion de la fenêtre 12 ne comportant pas d'avancée 18, le bord 45 ne trouve plus d'obstacle venant en butée.

Toutefois, dans sa descente au droit de la fenêtre 12, il est arrivé un moment où l'aile 48 est arrivée dans le puits 31. Dès lors, la patte 40 est bloquée en pivotement par l'aile 48 qui vient buter contre une paroi du puits 31. La patte 40 est bloquée dans sa translation vers l'extrémité libre de la tige 15 de sorte que la patte 40 est imperdable.

Lorsqu'on fait à nouveau pivoter la vis 16 dans le premier sens de rotation, l'aile 48 va venir en butée contre l'autre paroi du puits 31 forçant la patte 40 à remonter jusqu'à arriver à un niveau où l'aile 48 sort du puits 31. La patte 40 est alors en position rétractée.

Quelle que soit la position de la patte 40 sur la tige 16, cette patte 40 est toujours en butée contre un élément du corps 2 à l'exception de la hauteur unique à laquelle le passage à travers la fenêtre 12 est autorisé.

Du fait de ce passage à travers la fenêtre 12, la distance entre le moyeu 43 et le bord périphérique 44 de la patte 40 ne doit pas être supérieur à la distance entre le moyeu 43 et le bord 23. De par cette structure, une platine en forme de secteur angulaire, telle que la platine 41, avec un rayon adapté, permet d'obtenir une patte 40 avec la plus grande surface de serrage. En position de serrage de la cloison, les efforts de serrage sur la façade arrière sont répartis sur la surface importante de la patte et les efforts sur la façade avant sont répartis sur les quatre oreilles 6, de sorte que le risque d'endommager la cloison est limité.

On décrit maintenant le moulage de la boîte 1. L'étape de moulage dans la fabrication de la boîte 1 est représentée par l'étape I de la figure 13.

Le corps 2 et les pattes 40 sont en matière plastique et sont moulés en une seule opération.

Le moule (non représenté) comporte un noyau permettant de mouler la plus grande partie de l'intérieur du corps 2 : les surépaisseurs 10 avec leurs trous, les parties de la paroi latérale 3 comportant les parties défonçables 7, la surface intérieure au corps 2 des renfoncements 11, la surface 47 des pattes 40 et leurs renfoncements 32, les rattrapages en hauteur des marches 30 par rapport au fond 4, la surface de la collerette 5 du côté de l'ouverture frontale.

Le moule comporte également une empreinte permettant de former la surface extérieure de la paroi latérale ainsi que les surfaces extérieures des renfoncements 11, la surface extérieure des marches 30, la surface de la collerette 5 regardant la paroi 3.

Le moule comporte également deux tiroirs. Chaque tiroir est utilisé pour mouler les surfaces accessibles par les fenêtres 12. Il s'agit de la surface de la patte 40 au dos des renfoncements 49 (de part de d'autre du bossage 42), la partie visible de la fenêtre 12 du bossage 42, le bord 46 et le bord 45 (à l'exception de la partie en regard de l'avancée 18) ainsi que les zones latérales des marches 30. Ces tiroirs sont insérés par les fenêtres 12.

Grâce à la portion de fenêtre plus large sous l'avancée 18, il est possible d'insérer un tiroir dont l'encombrement selon la direction transversale correspond à celui de la patte 40.

Toutefois, le tiroir ne pouvant pas servir au moulage de l'extrémité du bord 45 positionné derrière l'avancée 18, celle-ci est moulée grâce au noyau, ce qui explique pourquoi le rebord 25 s'arrête là où commence l'avancée 18.

Enfin, la partie de la patte 40 comportant l'aile 48 est moulée par le puits.

Quatre liens sécables 50, 51 sont prévus dans le corps 2 issu de ce moulage (figures 11, 12). Les liens 50 permettent à la matière de s'écouler dans la zone prévue pour former la platine 41 moulée. Une fois le corps 2 moulé, les liens 50 sont sectionnés.

On positionne les vis 16 dans les renfoncements 11 jusqu'à encliquetage de la tête de la vis 16. Dans le même temps, la tige 15 vient en prise du moyeu 43 (étape II, figure 13), la patte 40 est alors toujours dans sa position rétractée telle que moulée et rendue fixe par les liens 50, 51.

On sectionne ensuite les liens 50 (étape III).

Il ne reste que les liens 51 entre le bossage 42 et la paroi latérale du puits 31 qui relient la patte 40 au reste du corps 2.

Lors du premier tour de vis, le bossage 42 suivant le pivotement du reste de la vis 16 et de la patte 40 va se libérer de ses liens 51.

Selon une variante du mode de réalisation, le bord en saillie est discontinu et ne comporte pas de collerette mais seulement les oreilles réparties sur le pourtour de l'ouverture.

Selon un autre mode de réalisation, la hauteur suivant la direction axiale de la portion de la fenêtre située sous l'avancée est inférieure à l'épaisseur de la patte, voire nulle, de sorte que cette patte, lorsqu'elle est au droit de la fenêtre, vient toujours buter contre l'avancée et ceci même en l'absence d'une aile.

## Revendications

1. Boîte d'encastrement comportant :
un corps (2) comportant :
- un fond (4) ;
- une paroi latérale (3) présentant du côté opposé audit fond (4) une ouverture ;
- un bord (5) en saillie vers l'extérieur au niveau de ladite ouverture ;
- un logement au niveau dudit fond ;
ladite boîte (1) comportant en outre :
- une patte (40), pour serrer une cloison (60) entre ledit bord (5) et ladite patte (40), présentant un moyeu (43), ladite patte (40) étant délimitée par un bord périphérique (44) à l'écart dudit moyeu (43) et deux bords latéraux (45, 46) s'étendant chacun dudit moyeu (43) à une extrémité respective dudit bord périphérique (44) ; et
- une vis (16) avec laquelle ledit moyeu (43) est en prise, pour la commande à pivotement de ladite patte (40) entre une position rétractée dans ledit logement et une position sortie en saillie à l'extérieur dudit corps (2) ;
ledit corps (2) comportant en outre des moyens de guidage (11) de ladite patte de sa position sortie vers ledit bord (5) et inversement,
ladite paroi (3) comportant, au niveau dudit fond (4), une fenêtre (12) ouvrant sur l'intérieur dudit corps (2) formant ledit logement pour le passage de ladite patte (40) de l'une à l'autre desdites position rétractée et position sortie, ladite fenêtre (12) et ladite patte (40) s'étendant transversalement à l'axe de ladite vis (16), ladite fenêtre (12) s'étendant selon cette direction transversale d'un premier bord (23) à un deuxième bord (22) opposé audit premier bord (23), de part et d'autre dudit moyeu (43), la distance entre ledit moyeu (43) et ledit premier bord (23) étant supérieure à la distance entre ledit moyeu (43) et ledit deuxième bord (22), ces distances étant adaptées à ce que ladite patte (40) passe de l'une à l'autre desdites position rétractée et position sortie par la portion de fenêtre (12) située entre ladite vis (16) et ledit premier bord (23),
**caractérisée en ce que** ledit deuxième bord (22) forme butée pour un respectif desdits bords latéraux (45, 46) en position rétractée et en position sortie, tandis que ledit corps (2) est en matière plastique.

2. Boîte selon la revendication 1, **caractérisée en ce que** ladite patte (40) comporte une platine (41) en forme de secteur angulaire et un bossage (42) comportant ledit moyeu (43), ledit bossage (42) s'étendant selon la direction de la vis (16) vers un puits (31) que comporte ledit fond (4).

3. Boîte selon la revendication 2, **caractérisée en ce que** lesdits bords latéraux (45, 46) de ladite patte sont alignés.

4. Boîte selon l'une quelconque des revendications 2 ou 3, **caractérisée en ce que** ladite fenêtre (12) présente un décrochement, la portion dudit deuxième bord (22) s'étendant à partir dudit décrochement vers ledit fond (4) étant en regard dudit premier bord, ledit premier bord (23) et ladite portion étant située à égale distance dudit moyeu (43).

5. Boîte selon la revendication 4, **caractérisée en ce que** ladite patte (40) est en matière plastique.

6. Boîte selon l'une quelconque des revendications 4 ou 5, **caractérisée en ce que** ledit puits (31) s'étend vers l'intérieur en regard d'une aile (48) en saillie de ladite patte (40) en position rétractée, cette aile (48) étant adaptée à former butée à pivotement pour ladite patte (40) lorsque cette patte (40) a une position sur ladite vis (16) telle que ladite aile (48) est située dans ledit puits (31).

7. Boîte selon l'une quelconque des revendications 2 à 6, **caractérisée en ce que** ledit bossage (42) présente une extrémité à l'écart de ladite platine (41), cette extrémité étant située dans ledit puits (31) en position rétractée de ladite patte (40).

8. Boîte selon la revendication 7, **caractérisée en ce que** ladite patte (40) est en matière plastique et ledit corps (2) comporte des liens sécables (51) entre ladite extrémité inférieure dudit bossage (42) et ledit puits (31), lesdits liens (51) étant adaptés à être rompus par pivotement de ladite patte (40) de sa position rétractée à sa position sortie.

9. Boîte selon l'une quelconque des revendications précédentes, **caractérisé en ce que** ladite paroi latérale (3) comporte un renfoncement (11) s'étendant dudit bord (5) en saillie à ladite fenêtre (12) et adapté à accueillir ladite vis (16), ce renfoncement (11) formant avec les portions adjacentes de la paroi latérale (3) lesdits moyens de guidage.

10. Boîte selon la revendication 9, **caractérisée en ce que** l'extrémité dudit renfoncement (11) opposée à ladite fenêtre (12) comporte des moyens d'encliquetage (19) de la tête de ladite vis (16).

11. Boîte selon l'une quelconque des revendications précédentes, **caractérisée en ce que** ledit bord (5) en saillie dudit corps (2) comporte au moins deux oreilles (6) réparties de part et d'autre de ladite vis (16), ces oreilles (6) étant chacune recourbées vers ladite paroi latérale (3).

12. Boîte selon l'une quelconque des revendications précédentes, **caractérisée en ce que** l'angle existant entre ladite paroi latérale (3) et ledit fond (4) au niveau de leur raccordement est arrondi.

13. Boîte selon l'une quelconque des revendications précédentes, **caractérisée en ce que** ladite boîte (1) comporte, en outre de ladite patte (40), de ladite vis (16), de ladite fenêtre (12) et desdits moyens de guidage formant un premier ensemble de serrage, un deuxième ensemble de serrage semblable audit premier ensemble de serrage disposé à l'opposé dudit premier ensemble de serrage.

14. Procédé de fabrication d'une boîte selon l'une quelconque des revendications précédentes, comportant l'étape de mouler ledit corps (2), ledit procédé étant **caractérisé en ce que**, lors de l'étape de moulage dudit corps (2), on moule ladite patte (40) dans sa position rétractée avec plusieurs liens sécables (50, 51) reliant ladite patte audit corps.

15. Procédé selon la revendication 14, **caractérisé en ce qu'**il comporte en outre l'étape d'insérer ladite vis (16) dans un renfoncement (11) de ladite paroi latérale (3) débouchant sur ladite fenêtre (12) et de mettre en prise ledit moyeu (43) avec ladite vis (16) et l'étape de sectionner au moins un dit lien sécable (50).

## Patentansprüche

1. Unterputzdose umfassend:
einen Körper (2) mit:
- einem Boden (4);
- einer Seitenwandung (3), die auf der dem Boden (4) entgegengesetzten Seite eine Öffnung aufweist;
- einem an der Öffnung nach außen vorstehenden Rand (5);
- einer Aufnahme in Höhe des Bodens;
wobei die Dose (1) ferner umfasst:
- einen Arm (40) zum Einklemmen einer Wand (60) zwischen dem Rand (5) und dem Arm (40), der eine Nabe (43) aufweist, wobei der Arm (40) von einem von der Nabe (43) beabstandeten Umfangsrand (44) und zwei jeweils von der Nabe (43) zu einem jeweiligen Ende des Umfangsrands (44) verlaufenden Seitenrändern (45, 46) umgrenzt ist; und
- eine Schraube (16), mit der die Nabe (43) in Eingriff ist, um den Arm (40) zwischen einer in die Aufnahme eingeschobenen Stellung und einer ausgefahrenen Stellung schwenkend zu betätigen;
wobei der Körper (2) zudem Mittel (11) aufweist, um den Arm aus seiner ausgefahren Stellung in Richtung des Rands (5) und umgekehrt zu führen,
wobei die Wandung (3) in Höhe des Bodens (4) ein sich nach innen in den Körper (2) öffnendes Fenster (12) aufweist, das die Aufnahme für den Wechsel des Arms (40) von der eingeschobenen in die ausgefahrene Stellung bildet, wobei sich das Fenster (12) und der Arm (40) quer zur Achse der Schraube (16) erstrecken, wobei das Fenster (12) in dieser Querrichtung von einem ersten Rand (23) zu einem dem ersten Rand (23) entgegengesetzten zweiten Rand (22) beidseits der Nabe (43) verläuft,
wobei der Abstand zwischen der Nabe (43) und dem ersten Rand (23) größer ist als der Abstand zwischen der Nabe (43) und dem zweiten Rand (22), wobei diese Abstände so ausgeführt sind, dass der Arm (40) durch den zwischen der Schraube (16) und dem ersten Rand (23) liegenden Fensterabschnitt (12) hindurch von der eingeschobenen in die ausgefahrene Stellung wechselt,
**dadurch gekennzeichnet, dass** der zweite Rand (22) für jeweils einen der Seitenränder (45, 46) in der eingeschobenen Stellung und ausgefahrenen Stellung einen Anschlag bildet, wohingegen der Körper (2) aus Kunststoff ist.

2. Dose nach Anspruch 1,
**dadurch gekennzeichnet, dass** der Arm (40) eine winkelsektorförmige Platte (41) und einen die Nabe (43) umfassenden Nocken (42) aufweist, wobei sich der Nocken (42) in Richtung der Schraube (16) zu einem Schacht (31) hin erstreckt, den der Boden (4) aufweist.

3. Dose nach Anspruch 2,
**dadurch gekennzeichnet, dass** die Seitenränder (45, 46) des Arms fluchtend angeordnet sind.

4. Dose nach einem der Ansprüche 2 oder 3,
**dadurch gekennzeichnet, dass** das Fenster (12) einen Absatz aufweist, wobei sich der Abschnitt des zweiten Rands (22) von diesem Absatz aus in Richtung des Bodens (4) und dabei dem ersten Rand gegenüberliegend erstreckt, wobei der erste Rand (23) und dieser Abschnitt mit gleichem Abstand zur Nabe (43) angeordnet sind.

5. Dose nach Anspruch 4,
**dadurch gekennzeichnet, dass** der Arm (40) aus Kunststoff ist.

6. Dose nach einem der Ansprüche 4 oder 5,
**dadurch gekennzeichnet, dass** der Schacht (31) einem in der eingeschobener Stellung an dem Arm (40) vorstehenden Seitenflügel (48) gegenüberliegend nach innen verläuft, wobei der Seitenflügel (48) einen Schwenkanschlag für den Arm (40) zu bilden vermag, wenn der Arm (40) auf der Schraube (16) so positioniert ist, dass der Seitenflügel (48) in dem Schacht (31) angeordnet ist.

7. Dose nach einem der Ansprüche 2 bis 6,
**dadurch gekennzeichnet, dass** der Nocken (42) mit Abstand zu der Platte (41) ein Ende aufweist, wobei das Ende in der eingeschobener Stellung des Arms (40) in dem Schacht (31) angeordnet ist.

8. Dose nach Anspruch 7,
**dadurch gekennzeichnet, dass** der Arm (40) aus Kunststoff ist und der Körper (2) durchtrennbare Verbindungsteile (51) zwischen dem unteren Ende des Nockens (42) und dem Schacht (31) aufweist, wobei die Verbindungsteile (51) so ausgeführt sind, dass sie durch das Schwenken des Arms (40) aus seiner eingeschobenen Stellung in die ausgefahrene Stellung durchtrennt werden.

9. Dose nach einem der vorhergehenden Ansprüche,
**dadurch gekennzeichnet, dass** die Seitenwandung (3) eine Einbuchtung (11) aufweist, die sich von dem am Fenster (12) vorstehenden Rand (5) aus erstreckt und die Schraube (16) aufzunehmen vermag, wobei die Einbuchtung (11) mit den benachbarten Abschnitten der Seitenwandung (3) die Führungsmittel bildet.

10. Dose nach Anspruch 9,
**dadurch gekennzeichnet, dass** das dem Fenster (12) entgegengesetzt angeordnete Ende der Einbuchtung (11) Mittel (19) zum Einrasten des Kopfs der Schraube (16) aufweist.

11. Dose nach einem der vorhergehenden Ansprüche,
**dadurch gekennzeichnet, dass** der am Körper (2) vorstehende Rand (5) wenigstens zwei beidseits der Schrauben (16) verteilt angeordnete Laschen (6) aufweist, wobei die Laschen (6) jeweils in Richtung der Seitenwandung (3) gebogen sind.

12. Dose nach einem der vorhergehenden Ansprüche,
**dadurch gekennzeichnet, dass** die zwischen der Seitenwandung (3) und dem Boden (4) an ihrem Übergang bestehende Ecke abgerundet ist.

13. Dose nach einem der vorhergehenden Ansprüche,
**dadurch gekennzeichnet, dass** die Dose (1) außer dem Arm (40), der Schraube (16), dem Fenster (12) und den Führungsmitteln, die zusammen eine erste Klemmanordnung bilden, eine der ersten Klemmanordnung ähnliche zweite Klemmanordnung umfasst, die an einer der ersten Klemmanordnung entgegengensetzten Seite angeordnet ist.

14. Verfahren zur Herstellung einer Dose nach einem der vorhergehenden Ansprüche, das den Schritt zum Formen des Körpers (2) umfasst,
wobei das Verfahren **dadurch gekennzeichnet ist, dass** beim Formen des Körpers (2) der Arm (40) in seiner eingeschobenen Stellung mit mehreren, den Arm mit dem Körper verbindenden durchtrennbaren Verbindungsteilen (50, 51) geformt wird.

15. Verfahren nach Anspruch 14,
**dadurch gekennzeichnet, dass** es ferner den Schritt zum Einführen der Schraube (16) in eine in das Fenster (12) mündende Einbuchtung (11) der Seitenwandung (3) und zum Ineingriffbringen der Nabe (43) mit der Schraube (16) und den Schritt zum Durchtrennen wenigstens eines der durchtrennbaren Verbindungsteile (50) umfasst.

## Claims

1. Flush-mounting box comprising:
a body (2) comprising:
- a base (4);
- a side wall (3) having an opening on the side opposite said base (4);
- an edge (5) projecting outwards in the region of said opening;
- a recess in the region of said base;
said box (1) further comprising:
- a tab (40) for clamping a partition (60) between said edge (5) and said tab (40), having a hub (43), said tab (40) being delimited by a peripheral edge (44) which is set apart from said hub (43) and two side edges, (45, 46) each of which extends from said hub (43) to a respective end of said peripheral edge (44); and
- a screw (16) with which said hub (43) is engaged, for controlling the pivot of said tab (40) between a position in which it is retracted into said recess and an extended position projecting externally from said body (2);
said body (2) further comprising means for guiding (11) said tab from its extended position towards said edge (5) and vice versa,
said wall (3) comprising, in the region of said base (4), a window (12) opening onto the inside of said body (2) forming said recess for the passage of said tab (40) between said retracted position and said extended position, said window (12) and said tab (40) extending transversely to the axis of said screw (16), said window (12) extending in this transverse direction from a first edge (23) to a second edge (22) opposite said first edge (23), on either side of said hub (43), the distance between said hub (43) and said first edge (23) being greater than the distance between said hub (43) and said second edge (22), these distances being suitable for said tab (40) to pass between said retracted position and said extended position via the window portion (12) which is located between said screw (16) and said first edge (23),
**characterised in that** said second edge (22) forms a stop for a respective one of said side edges (45, 46) in the retracted position and in the extended position, whereas said body (2) is made of plastics material.

2. Box according to claim 1, **characterised in that** said tab (40) comprises a plate (41) in the shape of an angular segment and a boss (42) comprising said hub (43), said boss (42) extending in the direction of the screw (16) towards a shaft (31) of said base (4).

3. Box according to claim 2, **characterised in that** said side edges (45, 46) of said tab are aligned.

4. Box according to either claim 2 or claim 3, **characterised in that** said window (12) has a break, the portion of said second edge (22) extending from said break towards said base (4) being opposite said first edge, said first edge (23) and said portion being located so as to be equidistant from said hub (43).

5. Box according to claim 4, **characterised in that** said tab (40) is made of plastics material.

6. Box according to either claim 4 or claim 5, **characterised in that** said shaft (31) extends towards the inside opposite a flange (48) which is projecting from said tab (40) in the retracted position, this flange (48) being suitable for forming a pivot stop for said tab (40) when this tab (40) is positioned on said screw (16) in such a way that said flange (48) is located in said shaft (31).

7. Box according to any of claims 2 to 6, **characterised in that** said boss (42) has an end that is set apart from said plate (41), this end being located in said shaft (31) in the retracted position of said tab (40).

8. Box according to claim 7, **characterised in that** said tab (40) is made of plastics material and said body (2) comprises breakable ties (51) between said lower end of said boss (42) and said shaft (31), said ties (51) being suitable for being broken by the pivoting of said tab (40) from its retracted position to its extended position.

9. Box according to any of the preceding claims, **characterised in that** said side wall (3) comprises an indentation (11) extending from said edge (5) which is projecting to said window (12) and is capable of housing said screw (16), this indentation (11) forming said guide means together with the adjacent portions of the side wall (3).

10. Box according to claim 9, **characterised in that** the end of said indentation (11) opposite said window (12) comprises means for snap-fitting (19) the head of said screw (16).

11. Box according to any of the preceding claims, **characterised in that** said edge (5) which is projecting from said body (2) comprises at least two lugs (6) which are distributed on either side of said screw (16), each of these lugs (6) being curved towards said side wall (3).

12. Box according to any of the preceding claims, **characterised in that** the corner between said side wall (3) and said base (4) in the connection region thereof is rounded.

13. Box according to any of the preceding claims, **characterised in that** said box (1) comprises, in addition to said tab (40), said screw (16), said window (12) and said guide means forming a first clamping assembly, a second clamping assembly which is similar to said first clamping assembly and is arranged opposite to said first clamping assembly.

14. Method for manufacturing a box according to any of the preceding claims, comprising the step of moulding said body (2), said method being **characterised in that**, during the step of moulding said body (2), said tab (40) is moulded in its retracted position together with a plurality of breakable ties (50, 51) connecting said tab to said body.

15. Method according to claim 14, **characterised in that** it further comprises the step of inserting said screw (16) in an indentation (11) in said side wall (3) opening onto said window (12) and of engaging said hub (43) with said screw (16) and the step of severing at least one of said breakable ties (50).
